# EUROPEAN PATENT SPECIFICATION

(11) **EP 2 542 101 B1**
(45) Date of publication and mention of the grant of the patent: **05.10.2016**
(21) Application number: 11708938.3
(22) Date of filing: 04.03.2011
(51) Int. Cl.: A23L 33/00, A23L 33/10

(54) **MODULATION OF POST-PRANDIAL FAT ABSORPTION**
MODULIERUNG DES POSTPRANDIALEN FETTABSORPTIONS
MODULATION DE L'ABSORPTION DE GRAISSE POST-PRANDIALE

(30) Priority: 04.03.2010 WO PCT/NL2010/050108
(43) Date of publication of application: 09.01.2013
(73) Proprietor: N.V. Nutricia, 2712 HM Zoetermeer (NL)
(72) Inventor: VAN DE HEIJNING, Hubertus Josephus Maria, NL-3523 PN Utrecht (NL); VAN DER BEEK, Eline Marleen, NL-6705 DB Wageningen (NL); ABRAHAMSE-BERKEVELD, Marieke, NL-6666 HS Heteren (NL); BOEHM, Günther, DE-04107 Leipzig (DE)
(74) Representative: Nederlandsch Octrooibureau
(86) International application number: PCT/NL2011/050156
(87) International publication number: WO 2011/108934

(56) References cited:
- WO-A1-2005/051091
- WO-A1-2009/154448
- WO-A1-2010/027258
- WO-A1-2010/027259
- WO-A1-2010/068086
- WO-A1-2010/068103
- WO-A1-2010/068105
- US-A- 5 709 888
- PARK ET AL.: "Influence of encapsulation of emulsified lipids with chitosan on their in vivo digestibility.", FOOD CHEMISTRY, vol. 104, 2007, pages 761-767, XP002607757,
- MUN ET AL: "Influence of interfacial composition on in vitro digestibility of emulsified lipids: potential mechanism for chitosan's ability to inhibit fat digestion.", FOOD BIOPHYSICS, vol. 1, 2006, pages 21-29, XP002607758,
- HUR ET AL.: "Influence of initial emulsifier type on microstructural changes occurring in emulsified lipids during in vitro digestion", FOOD CHEMISTRY, vol. 114, 2009, pages 253-262, XP002607759,

## Description

### FIELD OF THE INVENTION

The invention is in the field of infant milk formula and growing up milks. In particular it concerns nutritional compositions that are formulated such that they have a lasting influence on the metabolic response to fat.

### BACKGROUND

Breast-feeding is the preferred method of feeding infants. However, there are circumstances that make breast-feeding impossible or less desirable. In those cases infant formulae are a good alternative. The composition of modem infant formulae is adapted in such a way that it meets many of the special nutritional requirements of the fast growing and developing infant.

Still it seems that improvements can be made towards the constitution of infant milk formulae. For example it is known that, compared to formulae fed infants, breast fed infants have a decreased chance of becoming obese later in life. Also later in life blood lipid profiles are healthier in subjects who have been breast fed during infancy. Also, breastfeeding in early life is associated with higher bone mass density and bone mineral content later in life during childhood and early adolescence compared with those who were bottle-fed.

Efforts are directed in trying to establish what causes such differences, and more importantly measures are sought to be taken to diminish these differences.

For example WO 2005/051091 describes an infant formula wherein the fat structure and content is mimicked after human breast milk.

Another example is WO 2009/154448 that is directed at an infant formula that mimics the occurrence that when being breast fed, infants receive human milk wherein the fat concentration gradually increases during the feeding event. The hind-milk normally has a higher fat concentration compared to the fore-milk. Conventional infant milk formulae do not provide a fat gradient when being administered, i.e. the concentration of fat in the conventional infant milk formula is largely constant. In WO 2009/154448 a fat gradient is established in an infant milk formula by providing a formula comprising larger fat droplet than those found in conventional infant formula.

Park et al. Food Chemistry vol.104, 2007, p.761-767 discloses a diet composition comprising a protein, a digestible saccharide and a primary emulsion comprising vegetable lipid globules coated with lecithin.

Michalski et al. in Eur J Nutr (2005), 44:436-444 and Eur J Nutr (2006) 45:215-224 study direct influences of dispersion state and supramolecular structure of milk fat in various dairy preparations on triglyceride metabolism in the rat. In these studies a direct effect of different fat compositions was measured and the highest peak in plasma triglyceride (triacylglycerol) was observed for an unemulsified fat preparation whereas a more gradual profile with small casein covered droplets was found. Also lower basal triacylglycerol levels for the small casein covered droplets compared the unemulsified preparation was observed.

### SUMMARY OF THE INVENTION

Surprisingly it now has been found that the way fat is handled can be modulated or programmed by a diet containing lipid globules of a specific architecture. It has been found that exposure to a formula containing lipid globules which are coated with a layer comprising polar lipids for a prolonged period of time beneficially attenuates the availability of fat in plasma in response to an intake of standard fat (without coated droplets). Normally, post-prandial fat absorption as measured by the level of triglycerides in plasma shows a peak relatively short after intake of a meal. It has now been found that the post-prandial fat absorption can be spread over a prolonged period. There is no peak-increase of triglycerides in plasma shortly after intake of the meal, but the increase in plasma triglycerides shifts to a later moment and sustains over a longer period. Thus a more gradual entry or uptake of the fat in the body is achieved. This effect is attained after exposing the digestive system to a diet that contains phospholipid coated lipid globules. Such an effect was not observed when the phospholipids were added separately from the lipid globules.

Thus in general the present invention provides for improved and lasting post-prandial fat handling. In particular, the bioavailability of fat in nutritional compositions, more in particular infant formula, is improved. The gradual release of fat into circulation has as a consequence that more fat is available for growth. It has also been found that after the period of exposure to a diet that contains phospholipid coated lipid globules, the programming period, the basal level of plasma triglycerides after fasting was lower compared to the level found after intake of a standard formula. After full digestion of a standard meal, the plasma triglyceride levels returned to this low basal value. Also due to this lower basal plasma triglyceride level, which is more comparable to the basal levels seen after the period of breast feeding by the mother, an excess in plasma triglycerides is less likely to occur and hence storage of excess fat in adipose tissue occurs less. Thus, advantageously, the present invention provides for optimal use or improved bioavailability of nutritional fat. This improved bioavailability is specifically evidenced by an altered and improved fatty acid profile of cellular membranes, in particular cellular membranes of cells not belonging to the central nervous system, preferably cellular membranes of blood cells, more preferably of erythrocytes. Especially erythrocytes are considered representative for all bodily cells, except for cells of the central nervous system, including cells of the spinal cord and brain cells, due to the blood-brain barrier. Compared to compositions without phospholipid coated lipid globules, a decreased ratio of n6/n3 fatty acids and an increased amount of n3 fatty acids, in particular n3-LC-PUFAs, was found, despite the comparable fat composition of the diets. A further enhanced effect on decreased ratio of n6/n3 fatty acids was observed when lipid globules that were increased in size were used. This is important, since positive effects of n3 PUFA and n6/n3 ratio have been shown on blood pressure, inflammation obesity, insulin resistance, stroke risk and inflammatory status.

Standard infant milk formula have vegetable fat as lipid component. The fat is homogenized in order to create a stable emulsion and the lipid globules are small, with a volume-weighted mode diameter in the range of about 0.3 - 0.6 µm. Typically, polar lipids are not specifically added, but small amounts may be present in ready-to-drink formula for stability reasons. It was found that the lipid globules of standard, e.g. prepared from powdered, infant formulas are covered with milk proteins and not with polar lipids. It is assumed that these proteins are in particular casein.

The phospholipid coated lipid globules used in the present invention can be obtained upon homogenizing the fat component comprising vegetable lipid in the presence of phospholipids.

### DETAILED DESCRIPTION

The present invention thus concerns a nutritional composition comprising a protein component, a digestible carbohydrate component and a lipid component, wherein said lipid component comprises 10 to 50 wt.% vegetable lipids based on dry weight of the nutritional composition and 1.0 to 20 wt.% phospholipids based on total lipid, and wherein said lipid component comprises lipid globules with a core comprising said vegetable lipids and a coating comprising said phospholipids, for use in
- blunting the peak of post-prandial fat absorption and/or plasma triglyceride levels
- prolonging the post-prandial fat absorption and/or plasma triglyceride levels, and/or
- spreading of post-prandial bioavailability of fat
in an infant by administration of said nutritional composition for at least one week, preferably at least two weeks at a daily dose of at least 80 ml to said infant.

The effects that are achieved according to the present invention are with respect to the effect obtained with a 'standard' infant milk formula, i.e. a formula containing small size lipid globules obtained after homogenization of fat with less than 1.0 wt.% phospholipids based on total lipid being present.

The effects obtained according to the present method are observed after intake of nutrition containing fat in a conventional or regular form, hence a nutrition wherein no special measures are taken to arrive at phospholipid coated lipid globules.

Thus in one embodiment according to the present invention, the effect, in particular blunting the peak of post-prandial fat absorption and/or plasma triglyceride levels, prolonging the post-prandial fat absorption and/or plasma triglyceride levels, spreading of post-prandial bioavailability of fat occurs when administering a fat containing nutrition not comprising said lipid globules with a core comprising vegetable lipids and a coating comprising phospholipids.

Preferably the effects according to the present invention are obtained after the period of programming using phospholipid coated lipid globules. Thus preferably the nutrition containing fat in a conventional or regular form is administrered after this programming period.

Hence in a preferred embodiment the nutrition not comprising said lipid globules with a core comprising vegetable lipids and a coating comprising phospholipids is administered after the at least one week, preferably at least two weeks, of administration wherein said nutritional composition comprising lipid globules with a core comprising said vegetable lipids and a coating comprising said phospholipids was administered.

It is considered that the metabolic effect on fat handling lasts longer if the period of programming using phospholipid coated lipid globules is longer, thus upon longer exposure of the infant to the lipid globules with a core comprising vegetable lipids and a coating comprising phospholipids. Thus in one embodiment the present invention comprises the administration of the nutritional composition comprising the phospholipid coated lipid globules for at least 4 weeks, preferably at least 8 weeks, more preferably at least 12 weeks or even more preferably at least 16 weeks.

As mentioned above, the effects according to the present invention are obtained after the period of programming using phospholipid coated lipid globules and in particular the programming effect on post-prandial fat handling occurs when nutrition is taken that contains a standard fat composition, hence a fat composition not containing phospolipid coated lipid globules. It has been observed in a mouse model that a dietary imprinting or programming effect can sustain at least into early adulthood. Thus in an embodiment of the present invention, the effect, in particular blunting the peak of post-prandial plasma triglyceride levels, prolonging the post-prandial fat absorption, spreading of post-prandial bioavailability of fat occurs later in life of the infant, preferably after 36 months, preferably after 5 years, preferably after 10 years, preferably after 13 years or preferably even after 18 years in the life of the infant. Other preferred embodiments are that the effects are obtained during periods of intense growth, hence when the infant has an age between 3 and 10 years, preferably between 3 and 5 years, and hence during puberty, preferably when the infant has an age between 10 and 18 years.

In one embodiment the daily dose of the programming composition to be administered according to the present invention follows the usual nutritional requirements of an infant which increases with increasing age of the infant. This is particularly preferred as the programming composition is intended to be a nutritionally complete infant milk formula. In view of this, the daily dose of the programming composition to be administered according to the present invention may also be at least 150 ml, or at least 200 ml, or at least 300 ml, or at least 450 ml, or at least 500 ml. Also increasing the daily dose to a level above that of what is usual for the age of an infant may be advantageous in establishing the programming.

For sake of clarity it is noted that the lipid globules comprising a coating are formed from the vegetable lipids and phospholipids. Thus in one embodiment the lipid in the nutritional compositions in the use according to the present invention is present in the form of lipid globules with a core comprising said vegetable lipids and a coating comprising said phospholipids. Preferably essentially all the lipid in the nutritional compositions in the use according to the present invention is present in the form of lipid globules with a core comprising said vegetable lipids and a coating comprising said phospholipids.

As mentioned above, administering the programming composition also results in a lower basal level of plasma triglycerides and to an improved fatty acid profile of cellular membranes, in particular to an increased amount of n3 fatty acids, preferably n3 LC-PUFAs, and a decreased n6/n3 ratio in cellular membranes, preferably in erythrocytes.

Thus in one embodiment the present composition is also for use in
- lowering the fasting level of plasma triglycerides
- improving the fatty acid profile of cellular membranes.

These effects were determined after two weeks administration of the programming composition.

Thus in one aspect, the present invention concerns a nutritional composition comprising a protein component, a digestible carbohydrate component and a lipid component, wherein said lipid component comprises 10 to 50 wt.% vegetable lipids based on dry weight of the nutritional composition and 1.0 to 20 wt.% phospholipids based on total lipid, and wherein said lipid component comprises lipid globules with a core comprising said vegetable lipids and a coating comprising said phospholipids, for use in i) lowering the fasting level of plasma triglycerides, ii) improving the fatty acid profile of cellular membranes in an infant by administration of said nutritional composition for at least one week, preferably at least two weeks at a daily dose of at least 80 ml to said infant.

Preferably 'lowering' and 'improving' are with respect to the values obtained for a nutritional composition not comprising phospholipid coated lipid globules. Preferably the 'lowering' and 'improving' are towards values obtained in infants receiving human milk, in particular breast fed infants.

Preferably improving the fatty acid profile means increasing the amount of n3 fatty acids, preferably n3 LC-PUFA, and/or decreasing the ratio n6/n3.

### Lipid component

The present invention uses lipid. The lipid provides preferably 30 to 60% of the total calories of the composition. More preferably the present composition comprises lipid providing 35 to 55% of the total calories, even more preferably the present composition comprises lipid providing 40 to 50% of the total calories. When in liquid form, e.g. as a ready-to-feed liquid, the composition preferably comprises 2.1 to 6.5 g lipid per 100 ml, more preferably 3.0 to 4.0 g per 100 ml. Based on dry weight the present composition preferably comprises 10 to 50 wt.%, more preferably 12.5 to 40 wt.% lipid, even more preferably 19 to 30 wt.% lipid.

Lipids include polar lipids (such as phospholipids, glycolipids, sphingomyelin, and cholesterol), monoglycerides, diglycerides, triglycerides and free fatty acids. Preferably the composition comprises at least 75 wt. %, more preferably at least 85 wt.% triglycerides based on total lipids.

The lipid of the present invention comprises vegetable lipids. The presence of vegetable lipids advantageously enables an optimal fatty acid profile, high in (poly)unsaturated fatty acids and/or more reminiscent to human milk fat. Using lipids from cow's milk alone, or other domestic mammals, does not provide an optimal fatty acid profile. This less optimal fatty acid profile, such as a large amount of saturated fatty acids, is known to result in increased obesity. Preferably the present composition comprises at least one, preferably at least two lipid sources selected from the group consisting of linseed oil (flaxseed oil), rape seed oil (such as colza oil, low erucic acid rape seed oil and canola oil), salvia oil, perilla oil, purslane oil, lingonberry oil, sea buckthorn oil, hemp oil, sunflower oil, high oleic sunflower oil, safflower oil, high oleic safflower oil, olive oil, black currant seed oil, echium oil, coconut oil, palm oil and palm kernel oil. Preferably the present composition comprises at least one, preferably at least two lipid sources selected from the group consisting of linseed oil, canola oil, coconut oil, sunflower oil and high oleic sunflower oil. Commercially available vegetable lipids are typically offered in the form a continuous oil phase. When in liquid form, e.g. as a ready-to-feed liquid, the composition preferably comprises 2.1 to 6.5 g vegetable lipid per 100 ml, more preferably 3.0 to 4.0 g per 100 ml. Based on dry weight the present composition preferably comprises 10 to 50 wt.%, more preferably 12.5 to 40 wt.% vegetable lipid, even more preferably 19 to 30 wt.%. Preferably the composition comprises 50 to 100 wt.% vegetable lipids based on total lipids, more preferably 70 to 100 wt.%, even more preferably 75 to 97 wt.%. It is noted therefore that the present composition also may comprise non-vegetable lipids. Suitable and preferred non-vegetable lipids are further specified below.

### Phospholipids

The present invention uses phospholipids. Phospholipids belong to the group of polar lipids. Polar lipids are amphipathic of nature and include glycerophospholipids, glycosphingolipids, sphingomyelin and/or cholesterol. The composition comprises phospholipids (the sum of glycerophospholipids and sphingomyelin). Polar lipids in the present invention relate to the sum of glycerophospholipids, glycosphingolipids, sphingomyelin and cholesterol. According to the present invention phospholipids and optionally other polar lipids are present as a coating of the lipid globule. By 'coating' is meant that the outer surface layer of the lipid globule comprises phospholipids and optionally other polar lipids, whereas these polar lipids are virtually absent in the core of the lipid globule. The presence of phospholipids and optionally other polar lipids as a coating or outer layer of the lipid globule in the diet administered early in life was found to have a programming effect on fat handling in an infant.

The present composition preferably comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Lysophospholipids are a class of phospholipids with one fatty acyl chain. Preferably the present composition contains PC, PS, PI and/or PE, more preferably at least PC.

The present composition preferably comprises phosphosphingolipids, more preferably sphingomyelin. Sphingomyelins have a phosphorylcholine or phosphorylethanolamine molecule esterified to the 1-hydroxy group of a ceramide and is the major phosphospingolipid in milk fat. They are classified as phospholipid as well as sphingolipid, but are not classified as a glycerophospholipid nor as a glycosphingolipid.

The present composition preferably comprises glycosphingolipids. The term glycosphingolipids as in the present invention particularly refers to glycolipids with an amino alcohol sphingosine. The sphingosine backbone is O-linked to a charged headgroup such as ethanolamine, serine or choline backbone. The backbone is also amide linked to a fatty acyl group. Glycosphingolipids are ceramides with one or more sugar residues joined in a β-glycosidic linkage at the 1-hydroxyl position. Preferably the present composition contains gangliosides, more preferably at least one ganglioside selected from the group consisting of GM3 and GD3.

Sphingolipids are in the present invention defined as the sum of phosphospingolipids and glycosphingolipids. Phospholipids are in the present invention defined as the sum of sphingomyelin and glycerophospholipids. Preferably the phospholipids are derived from milk lipids. Preferably the weight ratio of phospholipids : glycosphingolipids is from 2:1 to 10:1, more preferably 2:1 to 5:1.

The present composition comprises phospholipids. Preferably the present composition comprises 1.0 to 20 wt.% phospholipids based on total lipid, more preferably 1.0 to 10 wt.%, even more preferably 2 to 10 wt.% even more preferably 3 to 8 wt.% phospholipids based on total lipid. Preferably the present composition comprises 0.1 to 10 wt.% glycosphingolipids based on total lipid, more preferably 0.5 to 5 wt.%, even more preferably 2 to 4 wt%. Preferably the present composition comprises 1.1 to 10 wt.% (glycosphingolipids plus phospholipids) based on total lipid.

The present composition preferably comprises cholesterol. The present composition preferably comprises at least 0.005 wt.% cholesterol based on total lipid, more preferably at least 0.02 wt.%, more preferably at least 0.05 wt.%., even more preferably at least 0.1 wt.%. Preferably the amount of cholesterol does not exceed 10 wt.% based on total lipid, more preferably does not exceed 5 wt.%, even more preferably does not exceed 1 wt.% of total lipid.

Preferably the present composition comprises 1.0 to 25 wt.% polar lipids based on total lipid, wherein the polar lipids are the sum of phospholipids, glycosphingolipids, and cholesterol, more preferably 1.5 to 12 wt.%, more preferably 1.0 to 10 wt.%, even more preferably 2 to 10 wt%, even more preferably 3.0 to 10 wt.% polar lipids based on total lipid, wherein the polar lipids are the sum of phospholipids, glycosphingolipids, and cholesterol.

Preferred sources for providing the phospholipids, glycosphingolipids and/or cholesterol are egg lipids, milk fat, buttermilk fat and butter serum fat (such as beta serum fat). A preferred source for phospholipids, particularly PC, is soy lecithin and/or sunflower lecithin. The present composition preferably comprises phospholipids derived from milk. Preferably the present composition comprises phospholipids and glycosphingolipids derived from milk. Preferably also cholesterol is obtained from milk. Preferably the polar lipids are derived from milk. Polar lipids derived from milk include the polar lipids isolated from milk lipid, cream lipid, butter serum lipid (beta serum lipid), whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from butter. Preferably the phospholipids, glycosphingolipids and/or cholesterol are obtained from milk cream. The composition preferably comprises phospholipids, glycosphingolipids and/or cholesterol from milk of cows, mares, sheep, goats, buffalos, horses and camels. It is most preferred to use a lipid extract isolated from cow's milk. The use of polar lipids from milk fat advantageously comprises the polar lipids from milk fat globule membranes, which are more reminiscent to the situation in human milk. Polar lipids derived from fat milk advantageously decrease fat mass to a larger extent than polar lipids from other sources. The polar lipids are located on the surface of the lipid globule, i.e. as a coating or outer layer. A suitable way to determine whether the polar lipids are located on the surface of the lipid globules is confocal laser scanning microscopy using fluorescent probes Annexin V Alexa Fluor 488 (In Vitrogen molecular probes) for labeling phospholipids, and Nile Red (Sigma-Aldrich) for labeling triglycerides. After labeling to the the milk samples Vectrahield mounting medium (Vector laboratories inc., Burliname USA) for reducing particle movement and photo-bleaching is suitably added. Observations can suitable be made using a Zeiss Laser Scanning Microscope with excitation wavelengths of 488/543/633 nm and emission filters set at band pass 505-530, and band pass 560-615.. The concomitant use of polar lipids derived from domestic animals milk and trigycerides derived from vegetable lipids therefore enables to manufacture coated lipid globules with a coating more similar to human milk, while at the same time providing an optimal fatty acid profile derived from the vegetable oils. Suitable commercially available sources for milk polar lipids are BAEF, SM2, SM3 and SM4 powder of Corman, Salibra of Glanbia, and LacProdan MFGM-10 or PL20 from Arla. Preferably the source of milk polar lipids comprises at least 4 wt.% phospholipids based on total lipid, more preferably 7 to 75 wt.%, most preferably 20 to 70 wt.% phospholipids based on total lipid. Preferably the weight ratio phospholipids to protein is above 0.10, more preferably above 0.20, even more preferably above 0.3. Preferably at least 25 wt.%, more preferably at least 40 wt.%, most preferably at least 75 wt.% of the polar lipids is derived from milk polar lipids.

### Fatty acid composition

Herein LA refers to linoleic acid and/or acyl chain (18:2 n6); ALA refers to α-linolenic acid and/or acyl chain (18:3 n3); LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). Medium chain fatty acids (MCFA) refer to fatty acids and/or acyl chains with a chain length of 6, 8 or 10 carbon atoms.

LA preferably is present in a sufficient amount in order to promote a healthy growth and development. The composition therefore preferably comprises less than 15 wt.% LA based on total fatty acids, preferably between 5 and 14.5 wt.%, more preferably between 6 and 10 wt.%. Preferably the composition comprises over 5 wt.% LA based on fatty acids. Preferably ALA is present in a sufficient amount to promote a healthy growth and development of the infant. The present composition therefore preferably comprises at least 1.0 wt.% ALA based on total fatty acids. Preferably the composition comprises at least 1.5 wt.% ALA based on total fatty acids, more preferably at least 2.0 wt.%. Preferably the composition comprises less than 10 wt.% ALA, more preferably less than 5.0 wt.% based on total fatty acids. The weight ratio LA/ALA should be well balanced in order to prevent obesity, while at the same time ensuring a normal growth and development. Therefore, the present composition preferably comprises a weight ratio of LA/ALA between 2 and 15, more preferably between 2 and 7, more preferably between 4 and 7, more preferably between 3 and 6, even more preferably between 4 and 5.5, even more preferably between 4 and 5.

Preferably the present composition comprises n-3 LC-PUFA. More preferably, the present composition comprises EPA, DPA and/or DHA, even more preferably DHA. Since a low concentration of DHA, DPA and/or EPA is already effective and normal growth and development are important, the content of n-3 LC-PUFA in the present composition, preferably does not exceed 15 wt.% of the total fatty acid content, preferably does not exceed 10 wt.%, even more preferably does not exceed 5 wt.%. Preferably the present composition comprises at least 0.2 wt.%, preferably at least 0.5 wt.%, more preferably at least 0.75 wt.%, n-3 LC-PUFA of the total fatty acid content. In infant formulae n3 LC-PUFA are preferably added, since the bioconversion of ALA to n3-LC PUFA is less efficient in infants.

As the group of n-6 fatty acids, especially arachidonic acid (AA) and LA as its precursor, counteracts the group of n-3 fatty acids, especially DHA and EPA and ALA as their precursor, the present composition comprises relatively low amounts of AA. The n-6 LC-PUFA content preferably does not exceed 5 wt.%, more preferably does not exceed 2.0 wt.%, more preferably does not exceed 0.75 wt.%, even more preferably does not exceed 0.5 wt.%, based on total fatty acids. Since AA is important in infants for optimal functional membranes, especially membranes of neurological tissues, the amount of n-6 LC-PUFA is preferably at least 0.02 wt.% more preferably at least 0.05 wt.%, more preferably at least 0.1 wt.% based on total fatty acids, more preferably at least 0.2 wt.%. The presence of AA is advantageous in a composition low in LA since it remedies LA deficiency. The presence of, preferably low amounts, of AA is beneficial in nutrition to be administered to infants below the age of 6 months, since for these infants the infant formulae is generally the only source of nutrition.

Preferably in addition to the vegetable lipid, a lipid selected from fish oil (preferably tuna fish oil) and single cell oil (such as algal, microbial oil and fungal oil) is present. These sources of oil are suitable as LC-PUFA sources. Preferably as a source of n-3 LC-PUFA single cell oil, including algal oil and microbial oil, is used, since these oil sources have a low EPA/DHA ratio. More preferably fish oil (even more preferably tuna fish oil) is used as a source of n-3 LC-PUFA since they have a higher EPA concentration which is advantageous since EPA is precursor of eicosanoids. Thus in one embodiment the present composition further comprises at least one lipid selected from the group consisting of fish oil, marine oil, algal oil, fungal oil and microbial oil.

### Profess for obtaining phospholipid coated lipid globules

The present invention uses lipid globules. The lipid globule size can be manipulated by adjusting process steps by which the present composition is manufactured. A suitable and preferred way to obtain lipid globules coated with phospholipids is to increase the amount of phospholipids compared to amounts typically present in infant formula and to have these phospholipids present during the homogenization process, wherein the mixture of aqueous phase and oil phase is homogenized. Typical amounts of phospholipids / polar lipids in infant formula are about 0.15 wt.% / 0.2 wt.% based on total fat. The amount of phospholipids is increased to at least 0.5 wt %, more preferably at least 1.0 wt.% based on total fat or the amount of phospholipids is increased to at least 0.6 wt.%, more preferably at least 1.0 wt.% based on total fat. In standard infant milk formula the lipid fraction (usually comprising vegetable fat, a small amount of phospholipids and fat soluble vitamins) is mixed into the aqueous fraction (usually comprising water, skimmed milk, whey, digestible carbohydrates such as lactose, water soluble vitamins and minerals and optionally non-digestible carbohydrates) by homogenization. If no homogenization was to take place, the lipid part would cream very quickly, i.e. separate from the aqueous part and collect at the top. Homogenization is the process of breaking up the fat phase into smaller sizes so that it no longer quickly separates from the aqueous phase but is maintained in a stable emulsion. This is accomplished by forcing the milk at high pressure through small orifices.

The process comprises the following steps:

### 1 Mixing ingredients

The ingredients of the composition are mixed, e.g. preferably blended. Basically a lipid phase, comprising the vegetable lipids, and an aqueous phase are added together. The ingredients further comprise polar lipids, more preferably phospholipids. The ingredients of the aqueous phase may comprise water, skimmed milk (powder), whey (powder), low fat milk, lactose, water soluble vitamins and minerals. Preferably the aqueous phase comprises non-digestible oligosaccharides. Preferably the aqueous phase is set at a pH between 6.0 and 8.0, more preferably pH 6.5 to 7.5. Preferably the polar lipids, in particular the phospholipids, are derived from milk. Advantageously, having polar lipids present in the aqueous mixture before homogenization results in an efficient coating of the lipid globules, consisting essentially of triglycerides, with a coating of phospholipids.

Preferably the lipid phase comprises 50 to 100 wt.% vegetable lipids based on total weight of the lipid phase. Instead of in the aqueous phase, the phospholipids, more preferably the phospholipids, may also be present in the lipid phase or in both phases. Alternatively the phospholipids may be added separately to an aqueous and lipid phase. The weight ratio of phospholipid to total lipid is from 1.0 to 20 wt.%, more preferably from 1.0 to 10 wt.%, even more preferably 3 to 8 wt.%. Preferably the weight ratio of polar lipids tot total lipid is 1.0 to 25 wt.%, more preferably from 1.2 to 12 wt.%

The aqueous and lipid phase are preferably heated before adding together, preferably at a temperature of 40 °C to 80 °C, more preferably 55 °C to 70 °C, even more preferably 55 °C to 60 °C. The mixture is also kept at this temperature and blended. A suitable way for blending is using an Ultra-Turrax T50 for about 30 - 60 s at 5000 - 10000 rpm. Subsequently demi-water may be added to this blend, to obtain the desired dry matter %. A desired dry matter % is for example 15%. Alternatively, the lipid phase is injected to the aqueous phase immediately prior to homogenization.

Minerals, vitamins, and stabilizing gums may be added at various points in the process depending on their sensitivity to heat. Mixing can for instance be performed with a high shear agitator. In the process of the present invention, skimmed milk (casein) is preferably not present in this step and added to the composition after homogenization of the fat fraction into the aqueous fraction (comprising compounds such as whey, whey protein, lactose).

### 2 Pasteurization

Preferably the mixture is then pasteurized. Pasteurization involves a quick heating step under controlled conditions which microorganisms cannot survive. A temperature of 60 to 80° C, more preferably 65 to 75 °C, held for at least 15 s, usually adequately reduces vegetative cells of microorganisms. Several pasteurization methods are known and commercially feasible. Alternatively this step can also be performed before mixing as in step 1 and/or be replaced by the heating step to 60 °C in step 1.

### 3 Homogenization

Subsequently the optionally pasteurized mixture comprising vegetable lipids, phospholipids and an aqueous phase is homogenized. Homogenization is a process which increases emulsion uniformity and stability by reducing the size of the lipid globules in the formula. This process step can be performed with a variety of mixing equipment, which applies high shear to the product. This type of mixing breaks the lipid globules into smaller globules. The mixture obtained is preferably homogenized in two steps, for example at 250 to 50 bar, respectively, so a total pressure of 300 bar in order to obtain small, stable lipid globules.

In case the size of the lipid globules is preferred to be larger the homogenization steps are performed under much lower pressures. For example 60° C at 5 to 100, preferably 30-100, bar and 5 to 50 bar respectively, with a total pressure of 35 to 150 bar. Alternatively, the mixture obtained is preferably homogenized in two steps at a lower temperature, between 15 and 40 °C, preferably about 20° C at 5 to 50 and 5 to 50 bar respectively, with a total pressure of 5 to 100 bar. This is remarkably lower than standard pressures, which typically are 250 to 50 bar, respectively, so a total pressure of 300 bar. It will be dependent on the specific homogenizer used, which pressure to apply. A suitable way is to use a pressure of 100 bar in the first step and 50 bar in the second step in a Niro Suavi NS 2006 H Homogenizer at a temperature of 60 °C. A suitable way is to use a pressure of 5 bar in the first step and 20 bar in the second step in a Niro Suavi NS 2006 H Homogenizer at a temperature of 20 °C.

Subsequently optionally other ingredients, not being lipid, may be added.

### 4 Sterilization

Subsequently, the emulsion obtained in step 3 is preferably sterilized. Preferably sterilization takes place in-line at ultra high temperature (UHT) and/or in appropriate containers to obtain a formula in the form of a sterile liquid. A suitable way for UHT treatment is a treatment at 120- 130 °C for at least 20 s. Alternatively, this sterilization step 4 is performed before the homogenization step 3.

Preferably the composition obtained by the above process is spray dried afterwards. Alternatively, the emulsion obtained in step 3 is concentrated by evaporation, subsequently sterilized at ultra high temperature and subsequently spray dried to give a spray dried powder which is filled into appropriate containers.

The difference on coating of the lipid globules can further be derived from the zeta potential. Zeta potential (*ζ* potential) measures the difference in millivolts (mV) in electrokinetic potential between the tightly bound layer around the surface and the distant zone of electroneutrality and is a measure of the magnitude of the repulsion or attraction between particles in a dispersion. Its value is also related to the stability of colloidal dispersions. A high absolute zeta potential will confer stability, i.e. the solution or dispersion will resist aggregation.

### Lipid globule size

According to the present invention, lipid is present in the composition in the form of lipid globules, emulsified in the aqueous phase. The lipid globules comprise a core and a coating. The core comprises vegetable fat and preferably comprises at least 90 wt.% triglycerides and more preferably essentially consists of triglycerides. The coating comprises phospholipids and optionally other polar lipids. Not all phospholipids and/or polar lipids that are present in the composition need necessarily be comprised in the coating, but preferably a major part is. Preferably more than 50 wt.%, more preferably more than 70 wt,%, even more preferably more than 85 wt.%, most preferably more than 95 wt.% of the phospholipids and/or polar lipids that are present in the composition are comprised in the coating of lipid globules. Not all vegetable lipids that are present in the composition need necessarily be comprised in the core of lipid globules, but preferably a major part is, preferably more than 50% wt.%, more preferably more than 70 wt.%, even more preferably more than 85 wt.%, even more preferably more than 95 wt.%, most preferably more than 98 wt.% of the vegetable lipids that are present in the composition are comprised in the core of lipid globules.

In one embodiment the lipid globules of the present invention preferably have
1. a volume-weighted mode diameter below 1.0 µm, and preferably in the range of 0.2-0.7 µm, more preferably in the range of 0.3-0.6 µm, and
2. a size distribution in such a way that less than 45 volume %, has a diameter between 2 and 12 µm, preferably a size distribution wherein more than 55 volume % of the lipid globules has a diameter of less than 2 µm, more preferably a size distribution in such a way that less than 35 volume %, has a diameter between 2 and 12 µm, even more preferably a size distribution wherein more than 65 volume % of the lipid globules has a diameter of less than 2 µm.

In one embodiment advantageously lipid globules that are larger in size may be used. Thus in another embodiment the lipid globules of the present invention preferably have
1. a volume-weighted mode diameter above 1.0 µm, preferably above 3.0 µm, more preferably 4.0 µm or above, preferably between 1.0 and 10 µm, more preferably between 2.0 and 8.0 µm, even more preferably between 3.0 and 8.0 µm, most preferably between 4.0 µm and 8.0 µm and/or
2. a size distribution in such a way that at least 45 volume %, preferably at least 55 volume %, even more preferably at least 65 volume %, even more preferably at least 75 volume % has a diameter between 2 and 12 µm. More preferably at least 45 volume %, preferably at least 55 volume %, even more preferably at least 65 volume %, even more preferably at least 75 volume % has a diameter between 2 and 10 µm. Even more preferably at least 45 volume %, preferably at least 55 volume %, even more preferably at least 65 volume %, even more preferably at least 75 volume % has a diameter between 4 and 10 µm.

The percentage of lipid globules is based on volume of total lipid. The mode diameter relates to the diameter which is the most present based on volume of total lipid, or the peak value in a graphic representation, having on the X-as the diameter and on the Y-as the volume (%).

The volume of the lipid globule and its size distribution can suitably be determined using a particle size analyzer such as a Mastersizer (Malvern Instruments, Malvern, UK), for example by the method described in Michalski et al, 2001, Lait 81: 787-796.

### Digestible carbohydrate component

The invention uses digestible carbohydrate. The digestible carbohydrate preferably provides 30 to 80% of the total calories of the composition. Preferably the digestible carbohydrate provides 40 to 60% of the total calories. When in liquid form, e.g. as a ready-to-feed liquid, the composition preferably comprises 3.0 to 30 g digestible carbohydrate per 100 ml, more preferably 6.0 to 20, even more preferably 7.0 to 10.0 g per 100 ml. Based on dry weight the present composition preferably comprises 20 to 80 wt.%, more preferably 40 to 65 wt.% digestible carbohydrates.

Preferred digestible carbohydrate sources are lactose, glucose, sucrose, fructose, galactose, maltose, starch and maltodextrin. Lactose is the main digestible carbohydrate present in human milk. The present composition preferably comprises lactose. The present composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the present composition preferably comprises at least 25 wt.% lactose, preferably at least 40 wt.%.

### Non-digestible oligosaccharides

Preferably according to the present invetion the nutritional composition comprises non-digestible oligosaccharides with a degree of polymerization (DP) between 2 and 250, more preferably 3 and 60.

The non-digestible oligosaccharide is preferably selected from the group consisting of fructo-oligosaccharides (such as inulin), galacto-oligosaccharides (such as transgalacto-oligosaccharides or beta-galacto-oligisaccharides), gluco-oligosaccharides (such as gentio-, nigero- and cyclodextrin-oligosaccharides), arabino-oligosaccharides, mannan-oligosaccharides, xylo-oligosaccharides, fuco-oligosaccharides, arabinogalacto-oligosaccharides, glucomanno-oligosaccharides, galactomanno-oligosaccharides, sialic acid comprising oligosaccharides and uronic acid oligosaccharides. Preferably the composition comprises gum acacia on combination with a non-digestible oligosaccharide.

Preferably the present composition comprises fructo-oligosaccharides, galacto-oligosaccharides and/or galacturonic acid oligosaccharides, more preferably galacto-oligosaccharides, most preferably transgalacto-oligosaccharides. In a preferred embodiment the composition comprises a mixture of transgalacto-oligosaccharides and fructo-oligosaccharides. Preferably the present composition comprises galacto-oligosaccharides with a DP of 2-10 and/or fructo-oligosaccharides with a DP of 2-60. The galacto-oligosaccharide is preferably selected from the group consisting of transgalacto-oligosaccharides, lacto-N-tetraose (LNT), lacto-N-neotetraose (neo-LNT), fucosyl-lactose, fucosylated LNT and fucosylated neo-LNT. In a particularly preferred embodiment the present method comprises the administration of transgalacto-oligosaccharides ([galactose]ₙ-glucose; wherein n is an integer between 1 and 60, i.e. 2, 3, 4, 5, 6, ...., 59 ,60; preferably n is selected from 2, 3, 4, 5, 6, 7, 8, 9, or 10). Transgalacto-oligosaccharides (TOS) are for example sold under the trademark Vivinal™ (Borculo Domo Ingredients, Netherlands). Preferably the saccharides of the transgalacto-oligosaccharides are β-linked.

Fructo-oligosaccharide is a non-digestible oligosaccharide comprising a chain of β linked fructose units with a DP or average DP of 2 to 250, more preferably 10 to 100. Fructo-oligosaccharide includes inulin, levan and/or a mixed type of polyfructan. An especially preferred fructo-oligosaccharide is inulin. Fructo-oligosaccharide suitable for use in the compositions is also already commercially available, e.g. Raftiline®HP (Orafti).

Uronic acid oligosaccharides are preferably obtained from pectin degradation. Uronic acid oligosaccharides are preferably galacturonic acid oligosaccharides. Hence the present composition preferably comprises a pectin degradation product with a DP between 2 and 100. Preferably the pectin degradation product is prepared from apple pectin, beet pectin and/or citrus pectin. Preferably the composition comprises transgalacto-oligosaccharide, fructo-oligosaccharide and a pectin degradation product. The weight ratio transgalacto-oligosaccharide : fructo-oligosaccharide : pectin degradation product is preferably (20 to 2) : 1 : (1 to 3), more preferably (12 to 7) : 1 : (1 to 2).

Preferably, the composition comprises of 80 mg to 2 g non-digestible oligosaccharides per 100 ml, more preferably 150 mg to 1.50 g, even more preferably 300 mg to 1 g per 100 ml. Based on dry weight, the composition preferably comprises 0.25 wt.% to 20 wt.%, more preferably 0.5 wt.% to 10 wt.%, even more preferably 1.5 wt.% to 7.5 wt.%. A lower amount of non-digestible oligosaccharides will be less effective in effect on BMC and/or BMD, whereas a too high amount will result in side-effects of bloating and abdominal discomfort.

### Protein component

The present invention uses proteins. The protein component preferably provides 5 to 15% of the total calories. Preferably the present composition comprises a protein component that provides 6 to 12% of the total calories. More preferably protein is present in the composition below 9% based on calories, more preferably the composition comprises between 7.2 and 8.0% protein based on total calories, even more preferably between 7.3 and 7.7% based on total calories. A low protein concentration advantageously ensures a lower insulin response, thereby preventing proliferation of adipocytes in infants. Human milk comprises a lower amount of protein based on total calories than cow's milk. The protein concentration in a nutritional composition is determined by the sum of protein, peptides and free amino acids. Based on dry weight the composition preferably comprises less than 12 wt.% protein, more preferably between 9.6 to 12 wt.%, even more preferably 10 to 11 wt.%. Based on a ready-to-drink liquid product the composition preferably comprises less than 1.5 g protein per 100 ml, more preferably between 1.2 and 1.5 g, even more preferably between 1.25 and 1.35 g.

The source of the protein should be selected in such a way that the minimum requirements for essential amino acid content are met and satisfactory growth is ensured. Hence protein sources based on cows' milk proteins such as whey, casein and mixtures thereof and proteins based on soy, potato or pea are preferred. In case whey proteins are used, the protein source is preferably based on acid whey or sweet whey, whey protein isolate or mixtures thereof and may include α-lactalbumin and β-lactoglobulin. More preferably, the protein source is based on acid whey or sweet whey from which caseino-glyco-macropeptide (CGMP) has been removed. Removal of CGMP from sweet whey protein advantageously reduces the threonine content of the sweet whey protein. A reduced threonine content is also advantageously achieved by using acid whey. Optionally the protein source may be supplemented with free amino acids, such as methionine, histidine, tyrosine, arginine and/or tryptophan in order to improve the amino acid profile. Preferably α-lactalbumin enriched whey protein is used in order to optimize the amino acid profile. Using protein sources with an optimized amino acid profile closer to that of human breast milk enables all essential amino acids to be provided at reduced protein concentration, below 9 % based on calories, preferably between 7.2 and 8.0% based on calories and still ensure a satisfactory growth. If sweet whey from which CGMP has been removed is used as the protein source, it is preferably supplemented by free arginine in an amount of from 0.1 to 3 wt.% and/or free histidine in an amount of from 0.1 to 1.5 wt.% based on total protein.

Casein is advantageously present. Preferably the composition comprises at least 3 wt.% casein based on dry weight. Preferably the casein is intact and/or non-hydrolyzed.

### Nutritional composition

The present composition is preferably particularly suitable for providing the daily nutritional requirements to a human with an age below 36 months, particularly an infant with the age below 24 months, even more preferably an infant with the age below 18 months, most preferably below 12 months of age. Hence, the nutritional composition is for feeding or is used for feeding a human subject, in particular an infatn. The present composition comprises a lipid and a protein and a digestible carbohydrate component wherein the lipid component preferably provides 30 to 60 % of total calories, the protein component preferably provides 5 to 20%, more preferably 5 to 15 wt.%, of the total calories and the digestible carbohydrate component preferably provides 25 to 75% of the total calories. Preferably the present composition comprises a lipid component providing 35 to 50% of the total calories, a protein component provides 6 to 12% of the total calories and a digestible carbohydrate component provides 40 to 60% of the total calories. The amount of total calories is determined by the sum of calories derived from protein, lipids and digestible carbohydrates.

The present composition is not human breast milk. The present composition comprises vegetable lipids. The compositions of the invention preferably comprise other fractions, such as vitamins, minerals according to international directives for infant formulae.

In order to meet the caloric requirements of the infant, the composition preferably comprises 50 to 200 kcal/100 ml liquid, more preferably 60 to 90 kcal/100 ml liquid, even more preferably 60 to 75 kcal/100 ml liquid. This caloric density ensures an optimal ratio between water and calorie consumption. The osmolarity of the present composition is preferably between 150 and 420 mOsmol/l, more preferably 260 to 320 mOsmol/l.

Preferably the composition is in a liquid form, with a viscosity below 35 mPa.s, more preferably below 6 mPa.s as measured in a Brookfield viscometer at 20°C at a shear rate of 100 s⁻¹. The preferred volume administered on a daily basis is in the range of about 80 to 2500 ml, preferably about 150 to 2500 ml, preferably about 200 to 2000 ml, preferably about 300 to 2000 ml, preferably about 450 to 1000 ml, preferably about 500 to about 1000 ml per day.

### Infant

The present method is advantageously applied to a human of 0-36 months, more preferably to a human of 0-18 months, more preferably to a human of 0-12 months, even more preferably to a human of 0-6 months. The younger the infant, the more influence on "programming".

Preferably the method is to be used in infants which have an unbalanced fat handling such as infants that are prematurely born or which are small for gestational age but also for infants that are large for gestational age, as these infants have an increased risk of developing obesity and/or too much fat mass later in life. Preferably the method is to be used in infants born from mothers who suffer from obesity and/or diabetes. Such infants have an increased risk of developing obesity and/or too much fat mass later in life.

In this document and in its claims, the verbs "to comprise" and "to contain" and their conjugations are used in thier non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

### EXAMPLES

### Example 1: Preparation of experimental infant milk formulae

An aqueous phase was prepared by dissolving demineralised whey powder, lactose, whey protein concentrate, skim milk powder, galacto-oligosaccharides, minerals and vitamin pre-mix in demineralised water to a dry weight content of 22.5 g/100g and heating the water phase at 65 °C. For infant milk formula (IMF) 3 a butter milk powder enriched in milk derived phospholipids SM2 (Corman, Beldium) was also added to the aqueous phase.

An oil blend was prepared using over 98 wt.% vegetable oils, oil soluble vitamins and antioxidants. Both the aqueous phase and the oil blend were heated to 65°C prior to mixing. The oil blend was added to the water phase and blended with an Ultra-Turrax T50 for about 30-60s at 5000-1000 rpm. The dry weight of this mixture was about 26%. The product was UHT treated for 30 s at 125 °C and subsequently cooled to 20 °C.

For IMF 1 a 2-steps homogenization was performed with 200 and 50 bar pressure, respectively in a Niro Suavi NS 2006 H homogenizer. For IMF 2 and 3 the homogenization pressure was 50 and 0 bar, respectively. All products were dried to a powder by spray drying. Long chain inulin was blended dry into the powder for all products. For IMF 2 SM2 was dry blended in the powder to the same final concentration as in IMF 3.

For IMF 1 no added phospholipids were present. The amount of vegetable (soy-derived) glycerophospholipids was 0.12 wt.% based on total fat for IMF 1. IMF 2 and 3 comprised 5.7 wt.% phospholipids based on total fat, of which about 98 % derived from the butter milk powder and about 2 % already present in the standard IMF, derived from vegetable oils. The SM2 powder comprises about 76 % glycerophospholipids, based on total phospholipids and further comprises about 24 wt.% sphingomyelin based on total phospholipids.

For IMF 2 the SM2 powder comprising the phospholipids were dry blended after the homogenization, sterilization and spray dry step in order to prevent coating of the lipid globules with phospholipids. In IMF 1 and IMF 2 the lipid globules are coated mainly with protein (especially casein). For IMF 3 the SM2 powder was present in the aqueous phase during the homogenization step resulting in a coating of the lipid globules with the phospholipids.

The size of the lipid globules was measured with a Mastersizer 20000 (Malvern Instruments, Malvern UK) and shown in Table 3.

The IMF obtained are very similar in macronutrient composition (see Table 1) and fatty acid profile (see Table 2), but differ in lipid globule architecture, i.e. size and coating (see Table 3).

**Table 1: Composition of the IMF per 100 g powder**

| | IMF 1, Control IMF | IMF 2 and 3 |
|---|---|---|
| KJ | 2008 | 2023 |
| Lipid (g) Phospholipids (wt.% lipid) | 25.1 | 25.3 |
| | 0.12 | 5.7 |
| Digestible Carbohydrates (g) | 53.4 | 53.8 |
| Fiber (g) | 5.7 | 5.7 |
| Protein (g) | 10.3 | 10.3 |

**Table 2: Fatty acid composition of the experimental IMF, percentage based on total fatty acids**

| | IMF 1, Control IMF | IMF 2 and 3 |
|---|---|---|
| C12:0 | 10.9 | 10.3 |
| C14:0 | 4.9 | 5.0 |
| C16:0 | 18.2 | 18.7 |
| C18:0 | 3.3 | 3.9 |
| C18:1 n-9 | 39.5 | 39.0 |
| C18:2 n-6 (LA) | 15.2 | 14.7 |
| C18:3 n-3 (ALA) | 2.8 | 2.7 |
| Others | 5.2 | 5.7 |
| n-6 | 15.2 | 14.8 |
| n-3 | 2.84 | 2.7 |
| n-6/n-3 | 5.4 | 5.5 |
| LA/ALA | 5. | 5.5 |
| SFA | 41.6 | 42.5 |
| MFA | 40.4 | 40.0 |
| PUFA | 18.0 | 17.5 |

**Table 3: Lipid globule characteristics of different milks (reconstituted from powder)**

| IMF | Coating with phospholipids | Volume Mode diameter µm | Volume % with a diameter between 2 and 12 µm |
|---|---|---|---|
| 1, Standard IMF | - | 0.96 | 2.5 |
| 2, Experimental IMF (free phospholipids) | - | 0.83 | 2.2 |
| 3, Experimental IMF of present invention (lipid globules coated with phospholipids) | + | 1.55 | 21.2 |

### Example 2: Programming effect of lipid globule coating on postprandial lipid levels in the plasma and fatty acid composition of red blood cell membranes

Offspring of C57/BL6 nests were culled to 4 male 2 female pups. On day 15 one group of 42 pups were separated from the dams and fasted for 2 h. One group of background-pups (n=7) was sacrificed and blood and liver specimen were obtained: the t=0 group. After 2 h of fasting, at t=0 male pups (n=35) were given a gavage of warm soy oil (0.25 ml/pup). Pups were sacrificed at t=1,2,3,5 and 8 h after gavage (n=7 per time point). From each pup body weight, and a blood sample, liver specimens, and fresh (wet) fecal droppings were obtained.

The remaining pups were assigned to 3 different experimental diets until day 28. The pups remained in the nests with their dams until day 21 when the dam was removed.

The experimental diets that were used for weaning were:
1) an IMF based control diet. This diet comprised 282 g standard IMF per kg, IMF 1 of example 1, i.e. small lipid globules with no coating of phospholipids. The diet was complemented to AIN-93G by adding protein, carbohydrates, fibre and vitamins/minerals. All lipid present in the diet (7 wt.%) was derived from the IMF powder.
2) an IMF based polar lipid control diet. This diet differed from diet 1 in that it comprised 282 g IMF 2 of example 1, i.e. comprised phospholipids, additionally added to the dry mixture and small lipid globules with no coating of phospholipids. All lipid present in the diet (7 wt.%) was derived from the IM powder.
3) a diet based on the IMF of the present invention. This diet differed from diet 1 and 2 that it comprises 282 g IMF 3 of example 1, i.e. with lipid globules coated with phospholipids. All lipid present in the diet (7 wt.%) was derived from the IMF powder.

On day 28 all pups were fasted for 2 h. One group of background-pups (n=7) was sacrificed and blood and liver specimen were obtained: the t=0 group.
At t=0 the other pups (n=35) were given a gavage of warm soy oil (0.25 ml/pup): the fat challenge. Pups were sacrificed at t=1,2,3,5 and 8 h after gavage (n=7 per time point). From each pup body weight, and a blood sample, liver specimens, and fresh (wet) fecal droppings were obtained.

From the blood samples obtained at day 15 and 28, triglyceride levels were determined colorimetrically (Sigma kit). From the erythrocytes membranes the fatty acid composition was determined.

### Results:

A good growth of the mice was observed with all 3 diets.
The plasma triglyceride levels in time are disclosed in table 4. It can be deduced from the t=0 levels on day 28 that fasting plasma triglyceride levels are beneficially lower in pups having been exposed to the experimental diet with IMF 3 in the previous 2 weeks. Also the lower levels of plasma triglycerides to which the values return after 8 h after the fat challenge are indicative of a lower basal levels of plasma triglycerides with diet 3. These values are comparable to the values observed in breast milk fat pups (day 15, t=0) and t=8.

Interestingly, the postprandial time course of plasma triglycerides after having consumed a standard fat load (the fat challenge) differs in mice having been exposed to a diet with IMF 3 compared to mice having been exposed to diets with IMF 1 and IMF 2. This difference can mainly be explained by the difference in location of the phospholipids (i.e. coated around the lipid globule), but not by the fatty acid composition or the composition or presence of the phospholipids as such. Postprandial levels of plasma triglycerides in mice having been exposed to a diet with IMF 3 were lower in maximal concentration, the maximal concentration was achieved later in time and plasma triglycerides were elevated for a more prolonged time. The relative response, setting the t=0 value on 0 %) is however higher with IMF 3, which is indicative of a difference use of the triglycerides, since the resulting plasma profile is the sum of appearance and disappearance. This finding is indicative for no peak levels but a more gradual entry of the fat in the body: This is beneficial since there is no need to store the excess plasma triglycerides in adipose tissue, but the triglycerides can be use immediately for heat and energy production (β-oxidation). Assumably the sustained and more stable level of plasma triglycerides of mice exposed to IMF 3 will be translated into different signalling messages in the body with regard to e.g. energy status and adipose metabolism.

**Table 4: Postprandial triglyceride level (n=4-7): means (s.e.m.). n.d.=not determined.**

| Time (h) | Day 15 | IMF 1 diet, Day 28 | IMF 2 diet, Day 28 | IMF 3 diet, Day 28 |
|---|---|---|---|---|
| 0 | 0.36(0.08) | 0.61 (0.06) | 0.54 (0.12) | 0.35 (0.06) |
| 1 | 0.18(0.04) | 1.07 (0.20) | 1.09 (0.13) | 0.82 (0.18) |
| 2 | 0.42 (0.14) | 0.84 (0.09) | 0.54 (0.09) | 0.97 (0.15) |
| 3 | 0.24 (0.06) | 0.44 (0.12) | 0.58 (0.08) | 0.95 (0.21) |
| 5 | n.d. | 0.29 (0.08) | 0.40 (0.11) | 0.69 (0.16) |
| 8 | 0.20 (0.04) | 0.30 (0.06) | 0.36(0.13) | 0.13 (0.01) |

The response after exposure with IMF 3 diet is also indicative for a higher bioavailability of fatty acids for a longer period of time for e.g. incorporation into membranes. Interestingly, after 2 weeks of exposure to a diet comprising IMF 1, 2 or 3, also the fatty acid composition of the erythrocytes was different, see table 5. With IMF 3 diet the n3 fatty acids were increased and n6 fatty acids were decreased, resulting in a decreased n6/n3 ratio. Consumption of IMF 2 diet had an intermediate effect. Also the amount of n3 long chain FA was increased with IMF 3 and 2 diet compared to IMF 1.

A decreased ratio of n6/n3 fatty acids and an increased amount of n3 fatty acids, especially long chain n3 fatty acids, is beneficial, since positive effects of n3 PUFA and n6/n3 ratio have been shown on blood pressure, inflammation obesity , insulin resistance, stroke risk and inflammatory status.

The changes of FA profile in erythrocyte membranes is indicative for an altered, improved, bioavailability of n3 fatty acids dependent on the lipid architecture of the dietary lipid (coated with phospholipids), irrespective of the fatty acid composition of the dietary lipid and irrespective of the presence of phospholipids as such. These differences are assumed to be the result of the difference in postprandial response to dietary fat (in particular a more sustained and stable level of plasma triglycerides) due to the difference in the architecture of the lipid globules.

**Table 5: Fatty acid profile in erythrocyte membranes in mice pups after two weeks of exposure to diets different in lipid architecture; (n=4-7) means (s.e.m.).**

| FA type | Day 28 | | |
|---|---|---|---|
| | IMF 1 diet | IMF 2 diet | IMF 3diet |
| | | | |
| n6 | 28.00 (0.35)^{a} | 26.36 (0.13)^{b} | 25.45 (0.20)^{c} |
| n3 | 6.98 (0.17)^{a} | 7.45 (0.08)^{b} | 7.63 (0.09)^{b} |
| n6/n3 | 4.02 (0.08)^{a} | 3.54 (0.04)^{b} | 3.34 (0.01)^{c} |
| n6 LC | 17.75 (0.42) | 16.95 (0.54) | 17.64 (0.23) |
| n3LC | 6.69 (0.17)^{a} | 7.10 (0.09)^{b} | 7.33 (0.09)^{b} |
| n6/n3 LC | 2.65 (0.03)^{a} | 2.38 (0.06)^{b} | 2.41 (0.01)^{b} |
| SFA | 42.04 (0.54) | 41.54 (0.69) | 43.06 (0.23) |
| MUFA | 19.56 (0.29) | 21.45 (0.93) | 20.07 (0.17) |
| PUFA | 35.17 (0.48)^{a} | 33.98 (0.15)^{b} | 33.25 (0.29)^{b} |

| | | | |
|---|---|---|---|
| a,b,c: Superscripts with a different letter indicate a statistically significant different value. | | | |

### Example 3: Affect of size of lipid globules coated with phospholipids on fatty acid composition of red blood cell membranes

Offspring of C57/BL6 nests were culled to 4 male 2 female pups. On day 15 the pups were assigned to 3 different experimental diets until day 42. The pups remained in the nests with their dams until day 21 when the dam was removed.

The experimental diets that were used for weaning were:
1) a diet based on the IMF of the present invention. The lipid globules are coated and have a mode diameter of 0.28 µm (volume weighted). (2 % between 2-12 um)
2) a diet based on the IMF of the present invention. The lipid globules are coated and have a mode diameter of 6.77 µm (volume weighted). (60 % between 2-12 um) Difference in lipid globule size was obtained by a difference in homogenization pressure as described in example 1. The source of phospholipids was SM2 powder from Corman which was used at a final concentration of about 1.4 % based on total lipid.For the rest the diets were similar as in example 1 and 2.

On day 42 from each pup a blood sample, was obtained. From the blood samples obtained at 42, from the erythrocytes membranes the fatty acid composition was determined.

### Results:

At day 42 the fatty acid composition of the erythrocytes was different, see table 6. This is indicative for higher bioavailability of fatty acids for a longer period of time for e.g. incorporation into membranes. With diet 2 the n3 fatty acids were further increased, the n6 fatty acids were further decreased, resulting in a further decreased n6/n3 ratio compared to diet 1. Similar effects were observed with the long chain n3 and n6 fatty acids. This is indicative for a further improved effect of large coated lipid globules compared to smaller coated lipid globules.

## Claims

1. Nutritional composition comprising a protein component, a digestible carbohydrate component and a lipid component, wherein said lipid component comprises 10 to 50 wt.% vegetable lipids based on dry weight of the nutritional composition and 1.0 to 20 wt.% phospholipids based on total lipid, and wherein said lipid component comprises lipid globules with a core comprising said vegetable lipids and a coating comprising said phospholipids, for use in
- blunting the peak of post-prandial fat absorption and/or plasma triglyceride levels,
- prolonging the post-prandial fat absorption and/or plasma triglyceride levels, and/or
- spreading of post-prandial bioavailability of fat
in an infant, by administration of said nutritional composition for at least one week, preferably at least two weeks at a daily dose of at least 80 ml to said infant.

2. Nutritional composition comprising a protein component, a digestible carbohydrate component and a lipid component, wherein said lipid component comprises 10 to 50 wt.% vegetable lipids based on dry weight of the nutritional composition and 1.0 to 20 wt.% phospholipids based on total lipid, and wherein said lipid component comprises lipid globules with a core comprising said vegetable lipids and a coating comprising said phospholipids, for use in
- lowering the fasting level of plasma triglycerides, and/or
- improving the fatty acid profile of cellular membranes
in an infant, by administration of said nutritional composition for at least one week, preferably at least two weeks at a daily dose of at least 80 ml to said infant.

3. The composition for use according to claim 1 or 2, wherein the composition is for feeding a human subject with an age between 0 and 36 months.

4. The composition for use according to any one of claims 1 - 3, wherein the, blunting the peak of post-prandial fat absorption and/or plasma triglyceride levels, prolonging the post-prandial fat absorption and/or plasma triglyceride levels and/or spreading of post-prandial bioavailability of fat occurs when administering a fat containing nutrition not comprising said lipid globules with a core comprising vegetable lipids and a coating comprising phospholipids.

5. The composition for use according to claim 4 wherein the nutrition not comprising said lipid globules with a core comprising vegetable lipids and a coating comprising phospholipids is administered after the at least one week, preferably at least two weeks of administration wherein said nutritional composition comprising lipid globules with a core comprising said vegetable lipids and a coating comprising said phospholipids was administered.

6. The composition for use according to any one of claims 1 - 5, wherein blunting the peak of post-prandial fat absorption, prolonging the post-prandial plasma triglyceride levels and/or spreading of post-prandial bioavailability of fat occurs later in life.

7. The composition for use according to any one of claims 1 - 6, wherein the nutritional composition comprises less than 12 wt.% protein based on dry weight of the composition and 20 to 80 wt.%, digestible carbohydrates based on dry weight of the composition.

8. The composition for use according to any one of claims 1 - 7, wherein in the nutritional composition the lipid provides 30 to 60 % of total calories, the protein provides 5 to 20% of the total calories and the digestible carbohydrate provides 25 to 75% of the total calories.

9. The composition for use according to claim 8 wherein in the nutritional composition the lipid provides 35 to 50% of the total calories, the protein provides 6 to 12% of the total calories and the digestible carbohydrate provides 40 to 60% of the total calories.

10. The composition for use according to any one of claims 1 - 9, wherein the phospholipids are derived from milk lipids.

11. The composition for use according to any one of claims 1 - 10, wherein the lipid globules have volume-weighted mode diameter above 1.0 µm

## Patentansprüche

1. Nahrungszusammensetzung, die eine Proteinkomponente, eine verdauliche Kohlenhydratkomponente und eine Lipidkomponente enthält, wobei die Lipidkomponente 10 bis 50 Gew.-% pflanzliche Lipide bezogen auf das Trockengewicht der Nahrungszusammensetzung und 1,0 bis 20 Gew.-% Phospholipide bezogen auf das Gesamtlipid beinhaltet, und wobei die Lipidkomponente Lipidkügelchen mit einem Kern, der die genannten pflanzlichen Lipide beinhaltet, und eine Beschichtung beinhaltet, die die genannten Phospholipide beinhaltet, zur Verwendung beim
- Abschwächen des Peaks der postprandialen Fettabsorption und/oder der Plasmatriglyceridniveaus,
- Verlängern der postprandialen Fettabsorption und/oder der Plasmatriglyceridniveaus und/oder
- Verbreiten der postprandialen Bioverfügbarkeit von Fett
in einem Säugling durch Verabreichen der genannten Nahrungszusammensetzung wenigstens eine Woche lang, vorzugsweise wenigstens zwei Wochen lang in einer Tagesdosis von wenigstens 80 ml an den Säugling.

2. Nahrungszusammensetzung, die eine Proteinkomponente, eine verdauliche Kohlenhydratkomponente und eine Lipidkomponente enthält, wobei die Lipidkomponente 10 bis 50 Gew.-% pflanzliche Lipide bezogen auf das Trockengewicht der Nahrungszusammensetzung und 1,0 bis 20 Gew.-% Phospholipide bezogen auf das Gesamtlipid beinhaltet, und wobei die Lipidkomponente Lipidkügelchen mit einem Kern, der die genannten pflanzlichen Lipide beinhaltet, und einer Beschichtung beinhaltet, die die genannten Phospholipide beinhaltet, zur Verwendung beim
- Senken des Nüchtern-Plasmatriglyceridniveaus und/oder
- Verbessern des Fettsäureprofils von Zellmembranen
in einem Säugling durch Verabreichen der genannten Nahrungszusammensetzung wenigstens eine Woche lang, vorzugsweise wenigstens zwei Wochen lang in einer Tagesdosis von wenigstens 80 ml an den Säugling.

3. Zusammensetzung zur Verwendung nach Anspruch 1 oder 2, wobei die Zusammensetzung zum Füttern eines menschlichen Subjekts im Alter zwischen 0 und 36 Monaten vorgesehen ist.

4. Zusammensetzung zur Verwendung nach einem der Ansprüche 1 - 3, wobei das Abschwächen des Peaks der postprandialen Fettabsorption und/oder der Plasmatriglyceridniveaus, das Verlängern der postprandialen Fettabsorption und/oder der Plasmatriglyceridniveaus und/oder das Verbreiten der postprandialen Bioverfügbarkeit von Fett dann erfolgt/erfolgen, wenn eine fetthaltige Nahrung verabreicht wird, die die genannten Lipidkügelchen mit einem Kern, der pflanzliche Lipide beinhaltet, und einer Beschichtung, die Phospholipide beinhaltet, nicht enthält.

5. Zusammensetzung zur Verwendung nach Anspruch 4, wobei die Nahrung, die die genannten Lipidkügelchen mit einem Kern, der pflanzliche Lipide beinhaltet, und einer Beschichtung, die Phospholipide beinhaltet, nicht enthält, nach der wenigstens einen Woche, vorzugsweise nach den wenigstens zwei Wochen verabreicht wird, in der/denen die genannte Nahrungszusammensetzung verabreicht wurde, die die Lipidkügelchen mit einem Kern, der die genannten pflanzlichen Lipide beinhaltet, und einer Beschichtung, die die genannten Phospholipide beinhaltet, enthält.

6. Zusammensetzung zur Verwendung nach einem der Ansprüche 1 - 5, wobei das Abschwächen des Peaks der postprandialen Fettabsorption, das Verlängern der postprandialen Plasmatriglyceridniveaus und/oder das Verbreiten der postprandialen Bioverfügbarkeit von Fett im späteren Leben erfolgt/erfolgen.

7. Zusammensetzung zur Verwendung nach einem der Ansprüche 1 - 6, wobei die Nahrungszusammensetzung weniger als 12 Gew.-% Protein bezogen auf das Trockengewicht der Zusammensetzung und 20 bis 80 Gew.-% verdauliche Kohlenhydrate bezogen auf das Trockengewicht der Zusammensetzung enthält.

8. Zusammensetzung zur Verwendung nach einem der Ansprüche 1 - 7, wobei in der Nahrungszusammensetzung das Lipid 30 bis 60 % der Gesamtkalorien, das Protein 5 bis 20 % der Gesamtkalorien und das verdauliche Kohlenhydrat 25 bis 75 % der Gesamtkalorien bereitstellt.

9. Zusammensetzung zur Verwendung nach Anspruch 8, wobei in der Nahrungszusammensetzung das Lipid 35 bis 50 % der Gesamtkalorien, das Protein 6 bis 12 % der Gesamtkalorien und das verdauliche Kohlenhydrat 40 bis 60 % der Gesamtkalorien bereitstellt.

10. Zusammensetzung zur Verwendung nach einem der Ansprüche 1 - 9, wobei die Phospholipide von Milchlipiden stammen.

11. Zusammensetzung zur Verwendung nach einem der Ansprüche 1 - 10, wobei die Lipidkügelchen einen volumengewichteten Modendurchmesser über 1,0 µm haben.

## Revendications

1. Composition nutritionnelle comprenant un composant protéinique, un composant glucidique digestible et un composant lipidique, dans laquelle ledit composant lipidique comprend 10 à 50 % en poids de lipides d'origine végétale basés sur le poids à sec de la composition nutritionnelle, et 1,0 à 20 % en poids de phospholipides basés sur le lipide total, et dans laquelle ledit composant lipidique comprend des globules lipidiques avec un noyau comprenant lesdits lipides d'origine végétale et un revêtement comprenant lesdits phospholipides, destinée à être utilisée pour
- diminuer le pic d'absorption de graisse post-prandiale et/ou les taux de triglycérides plasmatiques,
- prolonger l'absorption de graisse post-prandiale et/ou les taux de triglycérides plasmatiques, et/ou
- diffuser la biodisponibilité post-prandiale de la graisse
chez un nourrisson, par administration de ladite composition nutritionnelle pendant au moins une semaine, de préférence, au moins deux semaines à une dose journalière d'au moins 80 ml audit nourrisson.

2. Composition nutritionnelle comprenant un composant protéinique, un composant glucidique digestible et un composant lipidique, dans laquelle ledit composant lipidique comprend 10 à 50 % en poids de lipides d'origine végétale basés sur le poids à sec de la composition nutritionnelle, et 1,0 à 20 % en poids de phospholipides basés sur le lipide total, et dans laquelle ledit composant lipidique comprend des globules lipidiques avec un noyau comprenant lesdits lipides d'origine végétale et un revêtement comprenant lesdits phospholipides, destinée à être utilisée pour
- abaisser le niveau de triglycérides plasmatiques à jeun, et/ou
- améliorer le profil des acides gras des membranes cellulaires
chez un nourrisson, par administration de ladite composition nutritionnelle pendant au moins une semaine, de préférence, au moins deux semaines à une dose journalière d'au moins 80 ml audit nourrisson.

3. Composition destinée à être utilisée selon la revendication 1 ou 2, dans laquelle la composition est prévue pour l'alimentation d'un sujet humain âgé de 0 à 36 mois.

4. Composition destinée à être utilisée selon l'une quelconque des revendications 1 à 3, dans laquelle la diminution du pic d'absorption de graisse post-prandiale et/ou des taux de triglycérides plasmatiques, le prolongement de l'absorption de graisse post-prandiale et/ou des taux de triglycérides plasmatiques, et/ou la diffusion de la biodisponibilité post-prandiale de la graisse, se produi(t)sent lors de l'administration d'une nutrition contenant de la graisse ne comprenant pas lesdits globules lipidiques avec un noyau comprenant des lipides d'origine végétale et un revêtement comprenant des phospholipides.

5. Composition destinée à être utilisée selon la revendication 4, dans laquelle la nutrition ne comprenant pas lesdits globules lipidiques avec un noyau comprenant des lipides d'origine végétale et un revêtement comprenant des phospholipides, est administrée après la au moins une semaine, de préférence, au moins deux semaines d'administration, dans laquelle ladite composition nutritionnelle comprenant lesdits globules lipidiques avec un noyau comprenant lesdits lipides d'origine végétale et un revêtement comprenant des phospholipides, a été administrée.

6. Composition destinée à être utilisée selon l'une quelconque des revendications 1 à 5, dans laquelle la diminution du pic d'absorption de graisse post-prandiale, le prolongement des taux de triglycérides plasmatiques post-prandiaux, et/ou la diffusion de la biodisponibilité post-prandiale de la graisse, se produi(t)sent ultérieurement dans la vie.

7. Composition destinée à être utilisée selon l'une quelconque des revendications 1 à 6, dans laquelle la composition nutritionnelle comprend moins de 12 % en poids de protéine basés sur le poids à sec de la composition, et 20 à 80 % en poids de glucides digestibles basés sur le poids à sec de la composition.

8. Composition destinée à être utilisée selon l'une quelconque des revendications 1 à 7, dans laquelle, dans la composition nutritionnelle, le lipide fournit 30 à 60 % des calories totales, la protéine fournit 5 à 20 % des calories totales et le glucide digestible fournit 25 à 75 % des calories totales.

9. Composition destinée à être utilisée selon la revendication 8, dans laquelle, dans la composition nutritionnelle, le lipide fournit 35 à 50 % des calories totales, la protéine fournit 6 à 12 % des calories totales et le glucide digestible fournit 40 à 60 % des calories totales.

10. Composition destinée à être utilisée selon l'une quelconque des revendications 1 à 9, dans laquelle les phospholipides sont dérivés de lipides du lait.

11. Composition destinée à être utilisée selon l'une quelconque des revendications 1 à 10, dans laquelle les globules lipidiques ont un diamètre modal pondéré en volume supérieur à 1,0 µm.
